# EUROPEAN PATENT APPLICATION

(11) **EP 2 107 757 A1**
(43) Date of publication of application: **07.10.2009**
(21) Application number: 08251234.4
(22) Date of filing: 31.03.2008
(51) Int. Cl.: H04L 29/06

(54) **Identity management**

(71) Applicant: British Telecommunications Public Limited Company, London Greater London EC1A 7AJ (GB)
(72) Inventor: The designation of the inventor has not yet been filed
(74) Representative: Nash, Roger William

(57) **Abstract**

In providing identity management in distributed systems, it is known to provide a user with a single sign-on to accounts with different service providers with whom the user interacts by communicating with the service providers' computers. Such a single sign-on is provided by having the user authenticate himself to an identity provider computer, and thereafter relying on that identity provider computer to issue identity assertions on his behalf. An identity provider validation service is proposed with which service providers can interact on receiving an identity assertion on behalf of a user. This allows the service provider to rely only on the identity provider validation service rather than having to rely on the numerous identity providers who might issue identity assertion on behalf of one of their users. Furthermore, the identity assertions include a level of assurance indication, and the identity provider validation service indicates whether each identity provider can be trusted to properly issue an identity assertion claiming that level of assurance. This provides a more fine-grained and adaptable identity management than has hitherto been provided.

## Description

Identity Management is the field in information technology that handles management and representation of the concept of identity in the digital world. A user's identity is typically represented by an account on a website; the owner of the website recognizes the user by that account.

There are a vast number of websites on the Internet whose owners seek to control their own database of users. As a consequence Internet users have to deal with a number of online identities. The proliferation of these different identities has forced users to keep track of their identities in an easy way, most of the time compromising good security practice; e.g. re-using the same username and password for every web-site or writing down usernames and passwords for each site. Many of the Internet websites do not have resources to properly address strong authentication therefore leaving their user accounts vulnerable to attack. The result is a growing number of identity theft cases.

Identity Management strives to curb the growing number of online identities by using a technique called identity federation. Identity federation is basically the re-use of a single online identity for a plurality of different web-sites (sometimes this is described as Web Single Sign-On). From one aspect, Identity federation can be viewed as the outsourcing of user management and authentication to a different website (for instance, a website with expertise in strong authentication).

Known examples of Identity federation include the Security Assertion Markup Language (SAML) 2.0 which is an XML standard for exchanging authentication and authorization data between an identity provider (a producer of security assertions) and a service provider (a consumer of security assertions). Since a Service Provider (also called Relying Party) trusts an Identity Provider to correctly assert a customer's identity; a trust relationship exists between the Service Provider and the Identity Provider.
The Identity Assurance Working Group of Liberty Alliance IAEG has defined a trust framework that can be used to objectively assess the quality of an authentication assertion. This assessment is based on the processes, protocols and security measures involved at the Identity Provider as addressed by the NIST document 800-63.

The trust framework and the NIST 800-63 document defines a plurality of assurance levels (AL) which describe the degree to which a relying party in an electronic business transaction can be confident that the credential being presented actually represents the entity named in it and that it is the represented entity who is actually engaging in the electronic transaction. ALs are based on two factors:
- The extent to which the identity presented in an electronic credential can be trusted to actually belong to the entity represented. This factor is generally handled by identity proofing.
- The extent to which the electronic credential can be trusted to be a proxy for the entity named in it and not someone else (known as identity binding). This factor is directly related to the trustworthiness of the credential technology, the processes by which the credential is secured to a token, the trustworthiness of the system that manages the credential and token, and the system available to validate the credential, including the reliability of the credential service provider responsible for this service.

The Liberty Alliance defines four levels of assurance ranging from assurance level 1 (minimal) to assurance level 4 (high). Each assurance level describes a different degree of certainty in the identity of the claimant. The Liberty Alliance ALs enable subscribers and relying parties to select appropriate electronic trust services. Liberty Alliance uses the ALs to define the service assessment criteria to be applied to electronic trust service providers when they are demonstrating compliance through the Liberty Alliance assessment process. Relying parties should use the levels to map risk and determine the type of credential issuing and authentication services they require. Credential service providers (CSPs) should use the levels to determine what types of credentialing electronic trust services to offer.

One form of identity provider is a Certificate Authority in a Public-Key Infrastructure. Presently, it is difficult to compare the reliability of one Certificate Authority to another, though some progress in this direction has been made with the CABForum.org by both the certificate authority and browser vendor community.

A combination of conventional identity federation and Public Key Infrastructure technologies is seen in US Patent application 2006/0129817. That patent application proposes that a trusted third party (trusted by all members of the identity federation) should provide digital certificates to identity providers involved in the federation, which digital certificates certify that the trusted third party considers an identity provider to be a current member of the federation. As with many Public Key Infrastructure systems, the possibility of expelling an identity provider from the federation is catered for by providing short-lived certificates and/or certificate revocation lists.

According to the present invention, there is provided a method of operating a service computer to authenticate users, said method comprising:
receiving an identity assertion including an indication of the provider of said assertion and an indication of a level of assurance of said assertion;
in response thereto, accessing, directly or indirectly, a store storing data which indicates, for each of one of more identity providers, an indication of whether that identity provider is to be trusted to issue an identity assertion at each of a plurality of levels of assurance; and
accepting said identity assertion only if said stored data indicates that said identity provider is to be so trusted.

By receiving an identity assertion including an indication of the provider of said assertion and an indication of a level of assurance of said assertion, and in response thereto, accessing a store storing data which indicates, for each of one of more identity providers, an indication of whether that identity provider is to be trusted to issue an identity assertion at each of a plurality of levels of assurance, and accepting said identity assertion only if said stored data indicates that said identity provider is to be so trusted, a more fine-grained and reliable federated user identity scheme is provided.

There now follows, by way of example only, a description of an embodiment of the present invention, given with reference to the accompanying Figures in which:
Figure 1 shows a user's computer, a service provider's server and two identity management servers connected by the Internet;
Figure 2 shows data included within the global and local white lists stored in the system of Figure 1
Figure 3 shows a request-response interaction between the service provider's computer and an identity provider validation service computer
Figure 4 is a flow-chart illustrating the operation of the service provider's computer when programmed in accordance with the present embodiment; and
Figure 5 shows a flow of messages in which the two identity management servers are used to provide the user with a Single Sign-On capability.

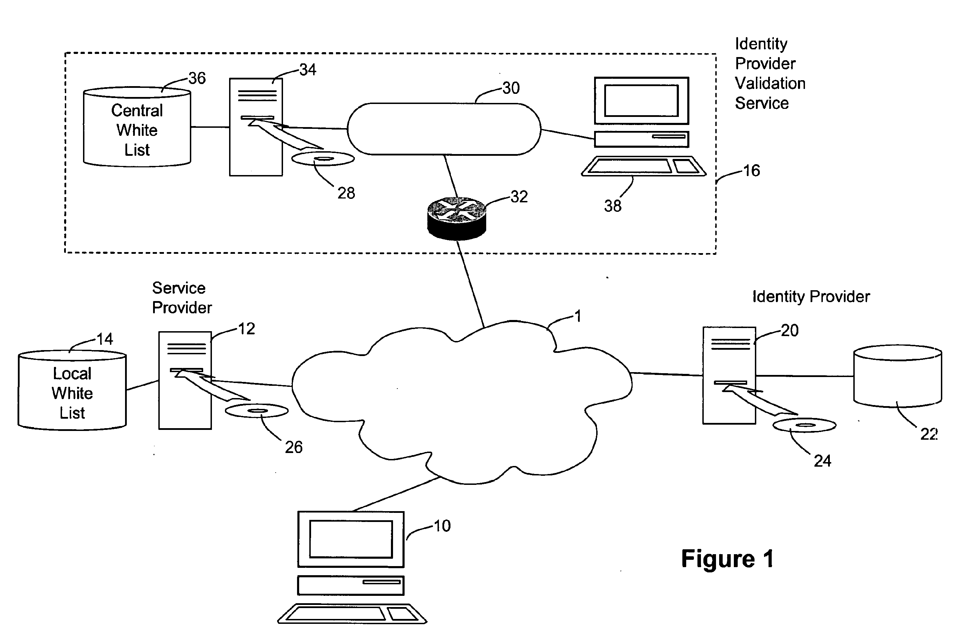

Figure 1 shows a user's personal computer 10, a service provider's server computer 12, an identity provider's server computer 20 and an identity provider validation network 16, all of which are interconnected to one another via the Internet 1.

The identity provider validation network 16 has a local area network 30 which is connected to the Internet 1 via router 32. Attached to the local area network 30 are an identity provider validation computer 34 with associated persistent storage 36 and an administrator's personal computer 38.

The user's personal computer 10 has a conventional browser application installed on it which enables the user to view web-pages downloaded from the service provider computer 12 on the personal computer's display.

The Identity Provider computer 20 similarly serves web-pages to the user. One of the web-pages includes a form which seeks authentication credentials from the user 10 of the personal computer. In response to the user providing authentication credentials which match username and password details stored in the Identity Provider computer's persistent storage 22, the Identity Provider computer issues an authentication assertion which the user can present to service provider computers like service provider computer 12 in order to authenticate himself to the service computer 12. Since the user can provide the same authentication assertion message to a plurality of service provider computers, the user is provided with a Single Sign-On capability. Software to control the Identity Provider to perform these functions is loaded from CD-ROM 24. It might of course instead be downloaded from a file server connected to the Internet 1.

The software on CD-ROM 24 is similar to conventional Identity Provider software but includes code which is executable by the Identity Provider computer 20 to add two data elements to identity assertions provided by the Identity Provider.

Where, as in the present embodiment, the SAML2.0 federation protocol is used, then the two extra data elements in the <*saml:AuthnStatement*> element are:
- A *CPS_Identifier* element that corresponds to the IdP Validation Service's identifier for the Identity Provider. The Validation Service uses this identifier to look up the certification details for that specific Identity Provider.
- A *class_assertion* element that corresponds to the different classes of assertions that are possible according to the Liberty Alliance trust framework and NIST document 800-63). The Validation Service could use this element to look up certification details on that specific class of assertions issued by the Identity Provider identified by the *CPS_Identifier.*

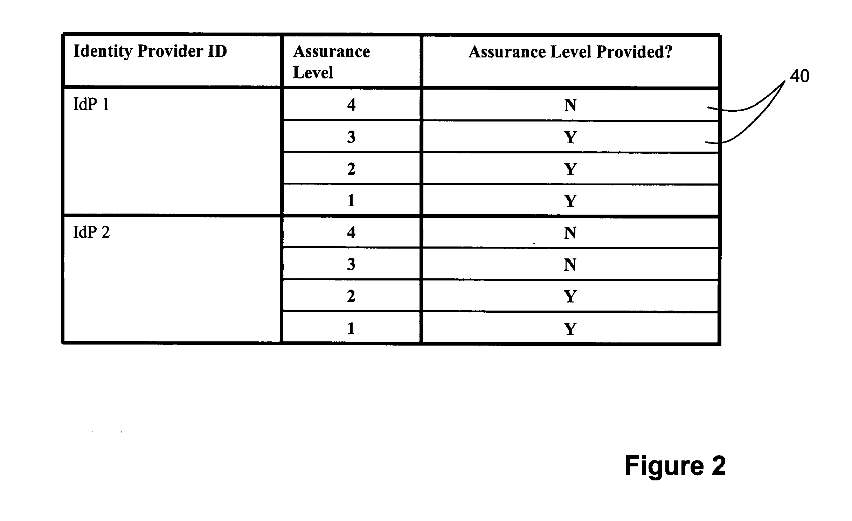

The software from CD-ROM 28 loaded onto Identity Provider Validation Service computer 16 builds and accesses a central white list in associated persistent storage 36. The Central White List (Figure 2) includes a table having a record for each of a plurality of Identity Providers. Each Identity Provider record has a Identity Provider ID, and for each of the four Liberty Alliance assurance levels that might be found in an identity assertion, a verification status value which indicates whether the Identity Provider Validation Service is able to verify that the Identity Provider which issued the identity assertion is to be trusted to provide an identity assertion at that level of assurance. The Central White List will be kept up-to-date by an administrator using personal computer 38 at the Identity Provider Validation Service to take account of frequent security audits of the operations of the Identity Providers included in the Central White List.

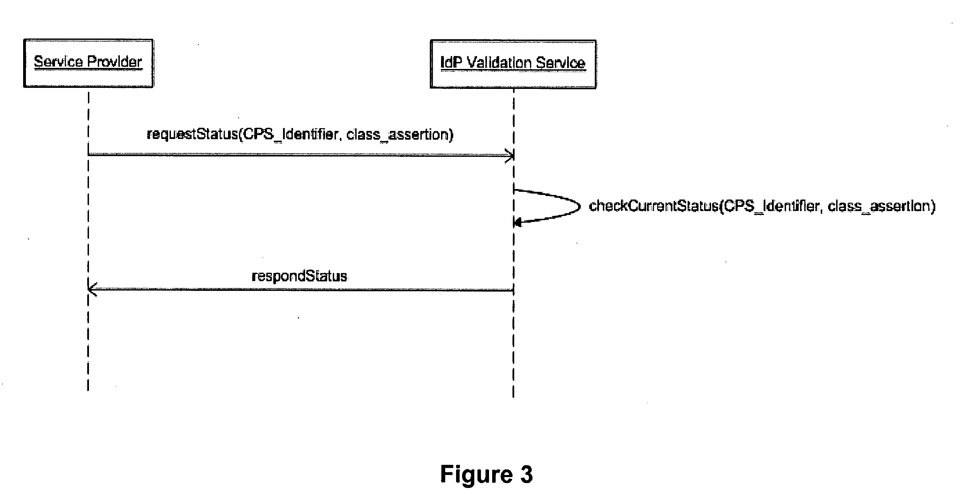

The software on CD-ROM 28 also controls the identity provider validation computer to offer an addressable Web Service that Service Providers' computers can use to query the certification state of a certain assertion class of a given identity provider. Figure 3 shows the message exchange that would take place when such a Web Service was used by a Service Provider.

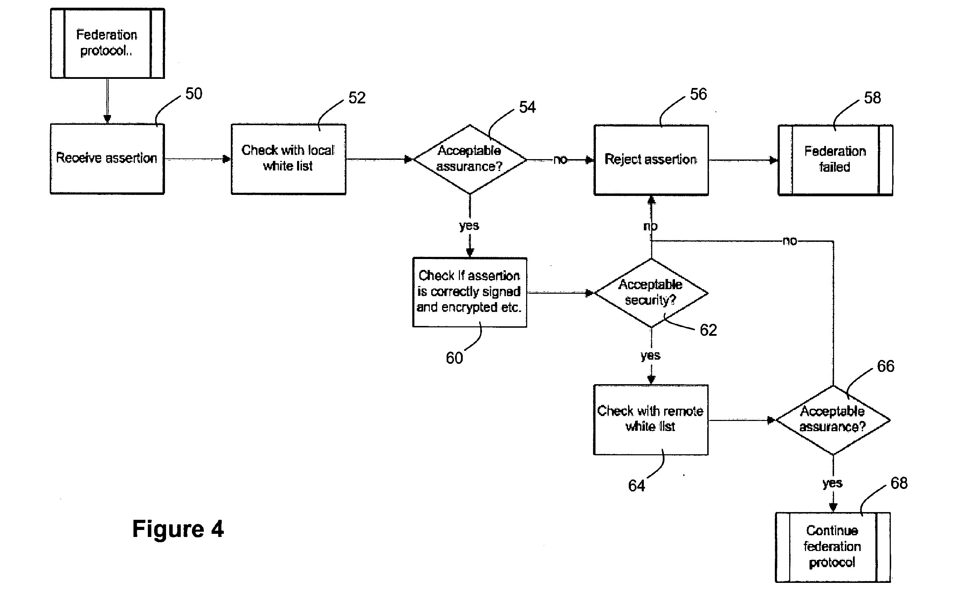

Software on CD-ROM 26 loaded onto each service provider computer 12 controls the service provider computer 12 to:
a) carry out the processes described below in relation to Figure 4; and
b) periodically update a local white list to bring it into conformity with the central white list stored in persistent storage 36 within the identity provider validation service network 16.

The local white list is stored in persistent storage 14 associated with the Service Provider computer 12.

The software on CD-ROM 26 causes the service provider computer 12 to take part in the federation protocol illustrated in Figure 4. The process begins when the service provider computer 12 receives (step 50) an identity assertion (which, it will be remembered, will include the additional CPS_Identifier element and class_assertion element mentioned above). That assertion is checked (step 52) against the Local White List by finding the record in the list which corresponds to the Identity Provider associated with the received CPS_Identifier and then finding the verification status value for the class indicated in the received class_assertion element. A test (step 54) is then performed to find whether the verification status value 40 indicates that identity assertions at this level of assurance by this identity provider can be verified by the Identity Provider Validation Service. If that is not the case, then the server computer rejects (step 56) the identity assertion and the federation fails (step 58).

If, on the other hand, the verification status value 40 indicates that identity assertions at this level of assurance by this identity provider can be verified by the Identity Provider Validation Service, then a conventional check of the identity assertion is made (step 60). If the conventional check finds the identity assertion unacceptable, then the Service Provider computer 12 rejects the assertion (step 56) and the federation fails (step 58).

If the conventional check finds the identity assertion acceptable, then the Service Provider computer 12 issues (step 64) a web service call (Figure 3) which includes the CPS_Identifier and class_assertion element to the Identity Provider Validation Service computer 34. The Identity Provider Validation Service computer then carries out a process similar to the assurance check (step 52) previously carried out by the Service Provider computer 12 - but using the potentially more up-to-date Central White List and returns a result indicating whether the Identity Service Provider Validation Service can verify identity assertions at this level of assurance (i.e. the level included in the identity assertion) by this identity provider (i.e. the Identity Provider associated with the CPS_Identifier in the identity assertion).

The service provider computer 12 then performs a test (step 66) to find whether the result returned from the Identity Provider Validation computer 34 indicates that the Identity Service Provider Validation Service can verify identity assertions at this level of assurance by this identity provider. If not, then the Service Provider computer 12 rejects the assertion (step 56) and the federation fails (step 58). If however, the Identity Service Provider Validation Service can verify identity assertions at this level of assurance by this identity provider, then the Service Provider computer 12 continues (step 68) the federation protocol.

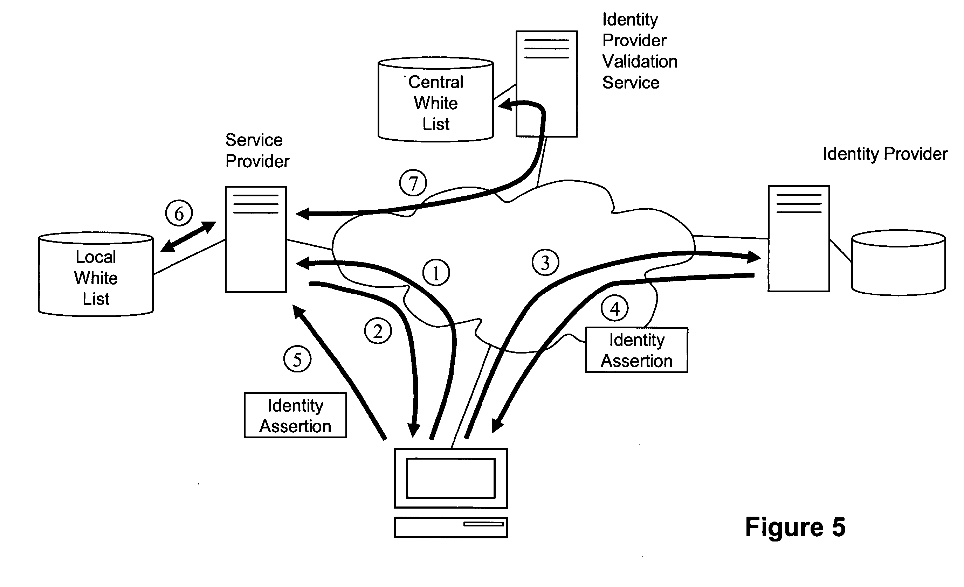

Figure 5 shows a message flow that might occur in a single sign-on messaging sequence which involves the method of the present embodiment.

The process begins when a user attempts (message 1) to access his account on a web-site served from Service Provider computer 12. The Service Provider computer 12 recognises a cookie stored on the user's computer 10 as being a cookie from an identity provider service with which it is federated (that cookie having been stored on the user's computer following an earlier authentication provided by the user to the identity provider). Following that recognition, the Service Provider computer asks the user whether he wishes to federate his account. Assuming the user indicates that he wishes to do so, then the Service Provider computer then sends a re-direct message (message 2) re-directing the user's computer 10 to the Identity Provider computer 20 and providing an indication of the class of identity assertion required by this service provider computer. The user's computer 10 then seeks (message 3) an identity assertion of that class from the Identity Provider computer 20. The Identity Provider computer 20 recognises this user, and if it is prepared to issue this user with an identity assertion of the appropriate class, responds with a message (message 4) including an Identity Assertion - the Identity Assertion including the CPS_Identifier and class_assertion elements mentioned above. The class_assertion element corresponds to the class requested by the user.

The user's computer 10 then forwards the identity assertion to the service provider computer 12 which responds by carrying out the process described above in relation to Figure 4. It will be remembered that the process initially checks whether the identity provider is trusted by the identity provider validation service by reading from a local white list (message 6), and if the identity provider is so trusted seeks up-to-date confirmation of that from the identity provider validation service computer 34 with associated central white list (message 7). Assuming those two checks are satisfactorily answered, then the service provider computer 12 subsequently allows the user to interact with his user account on the web-site.

The role of the identity provider validation service in the entire process will be understood from the above description. That service is a trusted third party, or delegate, that is responsible for regularly auditing the capabilities of identity providers. The identity provider validation service stores the audit results and can afterwards be used by service providers to 'query' the level of assurance capabilities of an identity provider.

The use of a global set of practices and protocols (as specified by NIST 800-63 and the Liberty Trust Framework) is also beneficial to federation as it allows service providers to trust a framework, as opposed to individual identity providers. Prior to the advent of the present invention, the service provider currently had to go through a non-trivial phase of setting up trust relationships and expectations with single identity providers. Using the Trust Framework, service providers instead just need an assertion from ANY identity provider that complies with the Trust Framework and can prove it by having passed on audit (and therefore being on a whitelist at the validation service).

A number of variations on the above embodiment are of course possible. By way of example, possible variations include:
i) Although the Security Assertion Mark-Up Language was used for the format of the Identity Assertion in the above example, the embodiment could have instead used any authentication authorisation & assertion protocol that is able to support federation.

In summary of the above disclosure, in providing identity management in distributed systems, it is known to provide a user with a single sign-on to accounts with different service providers with whom the user interacts by communicating with the service providers' computers. Such a single sign-on is provided by having the user authenticate himself to an identity provider computer, and thereafter relying on that identity provider computer to issue identity assertions on his behalf. An identity provider validation service is proposed with which service providers can interact on receiving an identity assertion on behalf of a user. This allows the service provider to rely only on the identity provider validation service rather than having to rely on the numerous identity providers who might issue identity assertion on behalf of one of their users. Furthermore, the identity assertions include a level of assurance indication, and the identity provider validation service indicates whether each identity provider can be trusted to properly issue an identity assertion claiming that level of assurance. This provides a more fine-grained and adaptable identity management than has hitherto been provided.

## Claims

1. A method of operating a service provider computer to authenticate users, said method comprising:
receiving an identity assertion including an indication of the provider of said assertion and an indication of a level of assurance of said assertion;
in response thereto, accessing, directly or indirectly, a store storing data which indicates, for each of one of more identity providers, an indication of whether that identity provider is to be trusted to issue an identity assertion at each of a plurality of levels of assurance; and
accepting said identity assertion only if said stored data indicates that said identity provider is to be so trusted.

2. A method according to claim 1 wherein said accessing step comprises accessing a local store to find whether said identity provider is to be trusted, and, on finding that the data in the local store indicates that said identity provider is to be trusted, accessing a shared store, updated more frequently than said local store, in order to check that said identity provider is to be trusted.

3. A distributed system comprising a user computer, a service provider computer, an identity provider computer, an identity provider validation store and communication links therebetween;
wherein said validation store stores data indicating, for each of one or more identity providers, for each of a plurality of levels of assurance, an indication as to whether said identity provider can be trusted to provide an identity assertion of the required level of assurance;
said identity provider computer being arranged in operation to provide an identity assertion data structure on behalf of the user of said user computer, said identity assertion data structure including elements identifying the identity provider and indicating a level of assurance associated with the assertion;
said service provider computer being arranged in operation to receive said identity assertion data structure issued on behalf of said user, and to respond thereto by accessing said identity provider validation store to check whether said identity provider can be trusted to provide an identity assertion at the level of assurance indicated in the received data structure.

4. An identity assertion data structure comprising an element identifying the issuer of the identity assertion and an element identifying the level of assurance of the identity assertion.

5. A computer program executable by a service provider computer to carry out the method steps of claim 1.

6. A computer readable medium tangibly embodying a computer program according to claim 5.

7. An electromagnetic signal embodying a computer program according to claim 5.
